# EUROPEAN PATENT APPLICATION

(11) **EP 1 367 230 A1**
(43) Date of publication of application: **03.12.2003**
(21) Application number: 03011379.9
(22) Date of filing: 19.05.2003
(51) Int. Cl.: F01L 9/04, F01L 9/02, F02B 37/00

(54) **Turbocharged engine**

(30) Priority: 31.05.2002 JP 2002158655
(71) Applicant: ISUZU MOTORS LIMITED, Shinagawa-ku, Tokyo (JP)
(72) Inventor: Hirokazu, Kurihara, c/o Isuzu Ad. Eng. Center, ltd, Fujisawa-shi, Kanagawa (JP)
(74) Representative: Schaumburg, Thoenes & Thurn

(57) **Abstract**

An object of the present invention is to improve turbine efficiency and reduce fuel consumption. A turbocharged engine according to the present invention comprises an actuator for driving an exhaust valve and control means for controlling this actuator. The actuator is controlled (2) such that the exhaust valve opens from an identical valve opening start timing to but more rapidly than a case (1) in which a mechanical cam is used. As a result of the rapid opening of the exhaust valve, a strong exhaust pulse with a large peak value is obtained, whereby turbine efficiency is improved and accordingly fuel consumption is reduced. Since valve opening begins at an identical timing to a case in which a mechanical cam is used, the exhaust gas is not unnecessarily compressed and thus fuel consumption does not increase.

## Description

### BACKGROUND OF THE INVENTION

### 1. Field of the Invention

The present invention relates to a turbocharged engine, and more particularly to a turbocharged engine comprising a so-called camless valve driving system for driving an exhaust valve using an actuator instead of a mechanical cam.

### 2. Description of the Related Art

The turbine efficiency of a turbocharger installed in an engine varies greatly depending on the pulsation state of the exhaust gas which flows into the turbine. In a diesel engine, for example, the turbine efficiency may exceed 100% at low speeds. What is referred to here as "turbine efficiency" indicates apparent turbine efficiency calculated from an average value of the turbine inlet pressure, inlet temperature, outlet pressure, and outlet temperature during one cycle. The "turbine efficiency" also refers to the efficiency of the turbocharger when the engine and turbocharger are combined. Hence it is possible for 100% to be exceeded. Although the turbine efficiency is "apparent", the actual engine performance is greatly affected by this turbine efficiency. To improve turbine efficiency it is effective to strengthen the exhaust gas pulse at the turbine inlet and suppress the frequency thereof to a low level. The following measures have been taken in order to achieve this.

1. The exhaust manifold and turbine housing are each divided into two such that exhaust gas is caused to flow from the respective exhaust manifolds into the respective turbine housings with independent exhaust pulses.

2. The volume of the exhaust manifold is reduced in order to strengthen the exhaust pulse.

These measures each have their own effects. According to these measures, however, the volume of the exhaust manifold is reduced, and thus the opposite effect of increasing exhaust resistance may be achieved.

In Japanese Patent Laid-Open Publication No. H9-125994, meanwhile, technology is disclosed for increasing the exhaust energy that is applied to a turbine in a turbocharged engine comprising a variable valve timing mechanism by retarding the opening start time of an exhaust valve such that exhaust gas is released outside of a cylinder in a compressed and pressurized state.

In so doing, however, additional energy is required to compress the exhaust gas, leading to an increase in fuel consumption. Further, although the opening and closing timing of the exhaust valve is variable, the valve is basically cam-driven and therefore the opening and closing speed cannot be controlled.

### SUMMARY OF THE INVENTION

An object of the present invention is therefore to provide a turbocharged engine which can achieve an improvement in turbine efficiency and a reduction in fuel consumption.

A turbocharged engine according to the present invention comprises an actuator for driving an exhaust valve and control means for controlling this actuator. The actuator is controlled such that the exhaust valve opens more rapidly as compared to a case in which a mechanical cam is used and in which the valve opening start timing is identical.

As a result of the rapid opening of the exhaust valve, a strong exhaust pulse with a large peak value is obtained, whereby turbine efficiency is improved and accordingly fuel consumption is reduced. Since valve opening begins at an identical timing to a case in which a mechanical cam is used, the exhaust gas is not unnecessarily compressed and thus fuel consumption does not increase.

It is preferable here that the actuator be controlled such that the exhaust valve is opened to a substantially maximum lift instantaneously from the start of valve opening.

It is further preferable that the actuator be controlled such that the internal pressure of an exhaust port reaches a maximum value within a quarter of the time period during which the exhaust valve is open from the opening start timing of the exhaust valve.

Further, a turbocharged engine according to the present invention comprises an actuator for driving an exhaust valve and control means for controlling this actuator, wherein the actuator is controlled such that the exhaust valve begins to open at an identical timing to a case in which a mechanical cam is used and the valve opening speed reaches a speed at which a desired exhaust pulse can be obtained.

### BRIEF DESCRIPTION OF THE DRAWINGS

Fig. 1 is a diagram showing a comparison of exhaust valve lift in this embodiment and a conventional example;
Fig. 2 is a diagram showing a comparison of the internal pressure of an exhaust port in this embodiment and the conventional example;
Fig. 3 is a diagram showing a comparison of turbine efficiency in this embodiment and the conventional example;
Fig. 4 is a diagram showing a comparison of boost pressure in this embodiment and the conventional example;
Fig. 5 is a diagram showing a comparison of fuel consumption in this embodiment and the conventional example; and
Fig. 6 is a view showing an engine according to this embodiment.

### DESCRIPTION OF THE PREFERRED EMBODIMENTS

A preferred embodiment of the present invention will be described below on the basis of the attached drawings.

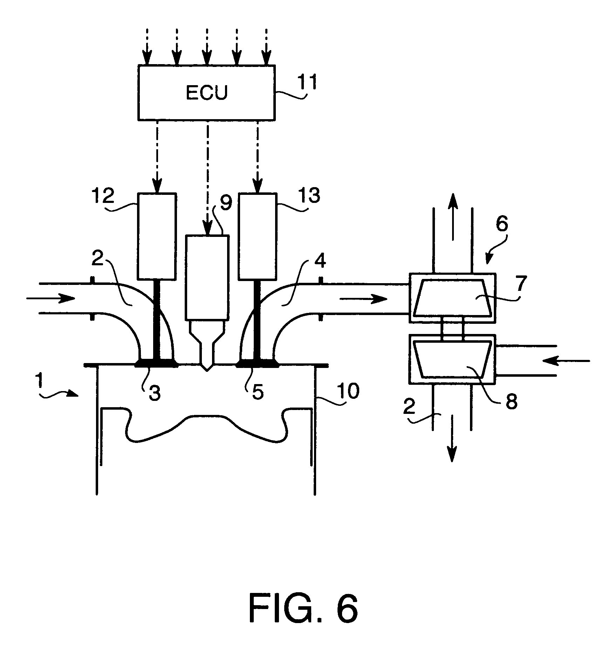

Fig. 6 shows a turbocharged engine according to this embodiment. This engine 1 is a diesel engine in which the outlet of an intake passage 2 is opened and closed by an intake valve 3 and the inlet of an exhaust passage 4 is opened and closed by an exhaust valve 5. As is well-known, the intake passage 2 is constituted by an intake port, an intake manifold, an intake pipe, and so on, and the exhaust passage 4 is constituted by an exhaust port, and exhaust manifold, an exhaust pipe, and so on. The engine 1 comprises a turbocharging machine, or in other words a turbocharger 6, and the turbocharger 6 comprises a turbine 7 which is provided on the exhaust passage 4 and a compressor 8 which is provided on the intake passage 2. The energy of the exhaust gas which is transmitted to the turbine 7 is used to drive the compressor 8 and to turbocharge the intake air. Fuel is injected directly into a cylinder 10 from an injector 9 which serves as a fuel injection valve.

An electronic control unit (to be referred to as "ECU" hereinafter) 11 is provided as control means for electronically controlling the engine, and various sensor types (not shown) for detecting the engine running conditions (rotation speed, load, crank angle, and so on) are connected to the ECU 11. The ECU 11 learns the actual engine running conditions at all times from the output of these sensors, and controls the injector 9 on the basis of the engine running conditions.

An intake valve driving actuator 12 and an exhaust valve driving actuator 13 are provided for open/close driving the intake valve 3 and exhaust valve 5. These actuators 12, 13 are constituted similarly, in this embodiment using oil pressure as a driving force. It should be noted, however, that the actuators 12, 13 are not limited thereto and air pressure, electromagnetic force, and so on may also be used. The actuator 12 (13) comprises a piston and a return spring (neither of which are shown in the drawing) such that when the actuator 12 (13) is switched ON, oil pressure is introduced to cause the intake valve 3 (exhaust valve 5) to open (lift) by means of the piston, and when the actuator 12 (13) is switched OFF, oil pressure is discharged to cause the intake valve 3 (exhaust valve 5) to close by means of the return spring. ON/OFF control of the actuators 12, 13 is performed by the ECU 11, and thus the opening start timing, open time period, and open completion timing of the intake valve 3 and exhaust valve 5 are controllable. The actuators 12, 13 are also duty controlled by the ECU 11 such that the oil pressure introduction and discharge speeds are variable and the operating speed of the actuators 12, 13, and accordingly the opening speed and closing speed of the intake valve 3 and exhaust valve 5, are controllable.

Hence by employing a so-called camless system in the engine 1, in particular the opening and closing timing and/or the opening and closing speed of the exhaust valve 5 may be controlled freely and actively. Thus a different lift characteristic is applied to the exhaust valve 5, and as a result turbine efficiency is improved and fuel consumption is reduced in comparison with a conventional engine in which a typical mechanical cam is used.

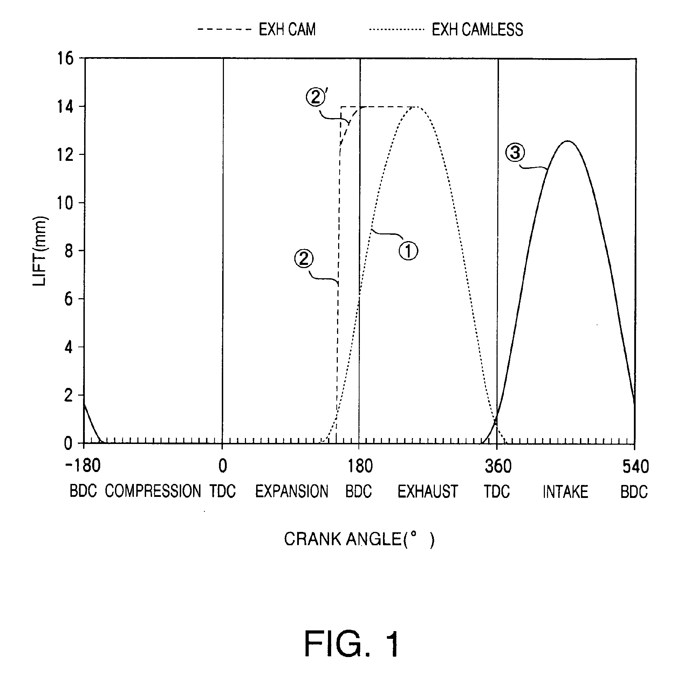

Fig. 1 is a diagram of exhaust valve lift showing the difference between a typical mechanical cam system and the camless system of this embodiment. (1) indicates a cam system and (2) indicates a camless system. (3) is a diagram of intake valve lift. In the conventional cam system (1), a mountain-form curved line determined according to the form of the cam is delineated. For reasons relating to mechanical structure such as the jump, bounce, surface pressure, and force of inertia of the valve, a mountain-form lift curve which is to a certain extent fixed is delineated. In particular, there is a fixed limit to the valve opening speed.

In the camless system (2) of the present embodiment, on the other hand, the exhaust valve opens more rapidly than in the cam system (1). In other words, the opening speed of the exhaust valve is increased beyond that of the cam system. In so doing, the pressure of the exhaust gas in the exhaust passage is increased beyond that of the conventional example, and due to the pressure increase at the turbine inlet, the turbine efficiency can be improved as will be explained hereinafter. In the camless system there are fewer constraints relating to mechanical structure than in the cam system, and since the operational speed of the valve is entirely dependent on the performance of the actuator 13, such rapid opening of the exhaust valve is possible.

In the camless system (2) of this embodiment, the opening start timing, open completion timing, and open time period are substantially equal to those of the cam system (1), the opening start timing being -30° BBDC, the open completion timing being 20° ATDC, and the open time period being 230° CA. The maximum lift amount is equal to that of the cam system (1). At the opening start timing the exhaust valve is lifted instantaneously to the maximum lift amount and maintained in that state. When the maximum lift timing of the cam system (1) is reached, the exhaust valve is closed in accordance with the profile of the cam system (1) and valve opening ends. That is, the profiles of the two systems (1), (2) differ only on the opening operation side and are identical on the closing operation side. It is particularly preferable to reduce the speed directly before the end of the closing operation in consideration of the impact which occurs when the valve is seated. Note that the opening speed may be gradually reduced directly before the end of the opening operation, as shown by (2)'.

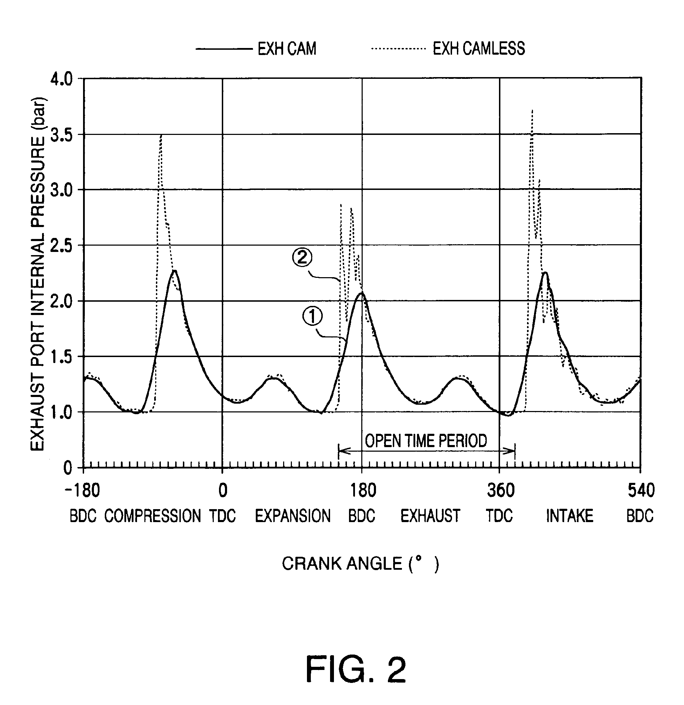

As a result of the above procedure the following effects are obtained. Fig. 2 shows the result of an experiment in which the internal pressure of the exhaust port was compared. Note that the engine rotation speed is fixed at a low speed (800rpm) and running conditions are steady. The diagram pertains to any one cylinder from a multiplicity of cylinders, the center of the drawing indicating a pressure peak directly obtained by opening the exhaust valve in this cylinder and the left and right sides of the drawing indicating the pressure peak obtained by opening the exhaust valve of another cylinder. As is understood from the drawing, a larger (up to two times larger) pressure peak value (maximum value) and a stronger exhaust pulse are obtained in the camless system (2) of this embodiment than in the conventional cam system (i). Moreover, in the camless system (2) of this embodiment the pressure peak is reached within a quarter of the open time period of the exhaust valve from the opening start timing, the exhaust valve driving actuator 13 being controlled so that this is achieved.

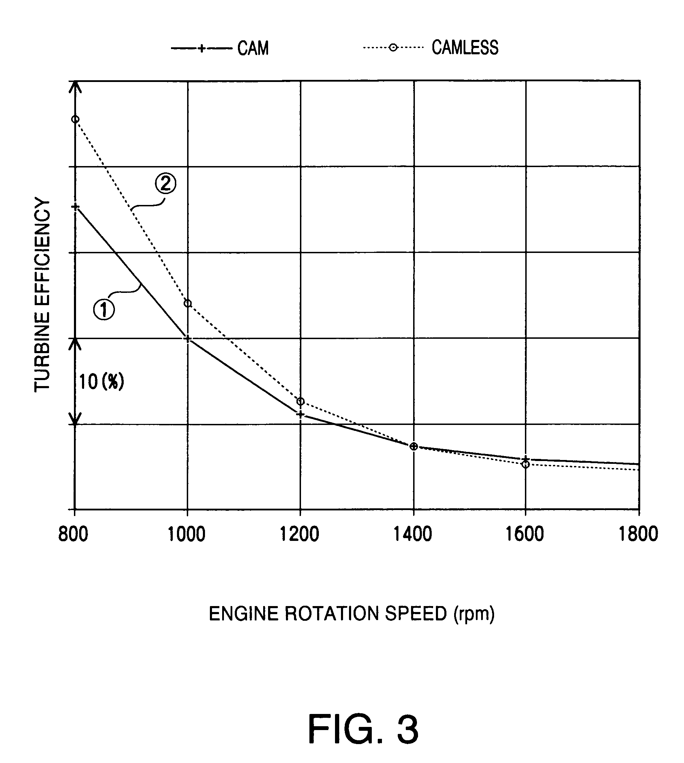

Fig. 3 shows the result of a simulation in which the turbine efficiency of the turbine 7 in the turbocharger 6 was compared. Here, what is referred to as "turbine efficiency" indicates the apparent turbine efficiency described above. Accordingly, 100% may be exceeded As is understood from the drawing, turbine efficiency increases in the camless system (2) of this embodiment beyond that of the conventional cam system (i), and this increase becomes particularly striking toward the low speed side. The reason turbine efficiency increases toward the low speed side is that the pulsation frequency of the exhaust gas becomes lower as the speed decreases. Improving the apparent efficiency and improving the operating environment of the turbine are more closely linked to actual reductions in fuel consumption than improving the actual turbine efficiency and improving the performance of the turbine itself.

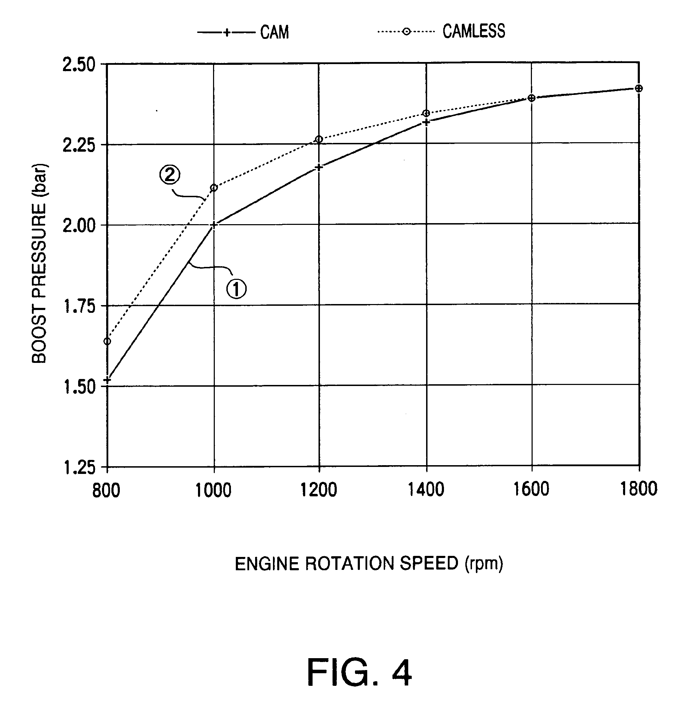

Fig. 4 shows the result of an experiment in which the boost pressure generated by the compressor 8 of the turbocharger 6 was compared. As is understood from the drawing, the boost pressure increases in the camless system (2) of this embodiment beyond that of the conventional cam system (1), and this increase becomes particularly striking toward the low speed side. This is caused by the effect of the increase in turbine efficiency shown in Fig. 3. Compared with the conventional example, boost pressure is improved in this embodiment particularly on the low speed side.

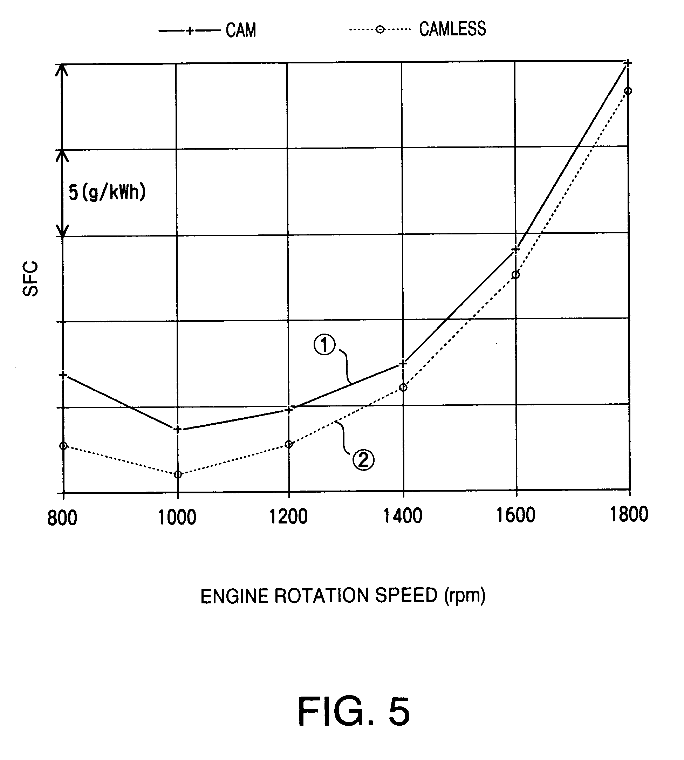

Fig. 5 shows the result of an experiment in which fuel consumption was compared. As is understood from the drawing, in the camless system (2) of this embodiment fuel consumption (SFC (g/kWh) is reduced in comparison with the conventional cam system (1), and this reduction effect becomes particularly striking toward the low speed side. This is also caused by the effect of the increase in turbine efficiency shown in Fig. 3 and the like. Further, due to the rapid opening of the exhaust valve, the pressure within the cylinder falls more quickly than in the conventional example, and thus the workload required for expelling the exhaust gas by raising the piston is reduced. This is also considered to be a reason for the reduction in fuel consumption.

Thus according to this embodiment, a strong exhaust pulse with a larger peak value than the conventional example can be obtained, turbine efficiency is improved, and improved boost and reduced fuel consumption are achieved particularly on the low speed side. Further, since the internal pressure of the turbine inlet rises rapidly due to the rapid opening of the exhaust valve, delays in turbine response can also be improved.

In the technology disclosed in Japanese Patent Application Laid-Open Publication No. H9-125994, fuel consumption is increased in order to compress the exhaust gas by delaying the opening start timing of the exhaust valve, but in this embodiment the opening start timing of the exhaust valve is identical to that of a cam system and therefore the exhaust gas is not compressed in the manner disclosed in the technology of the above publication. As a result, fuel consumption does not increase. Further, the technology disclosed in the above publication is effective only when speed is increased, whereas this embodiment is effective not only when speed is increased but also under steady running conditions. Hence reductions in fuel consumption and so on can be realized in a broad operating region.

If the aforementioned considerations are expanded, it is possible according to a camless system to control the exhaust pulse by controlling the opening timing and/or the opening speed of the exhaust valve. By using this type of control accordingly to produce an exhaust pulse at which the turbine efficiency is improved to as large an extent as possible, fuel consumption can be reduced. In this case it is preferable to set the valve opening start timing to the same timing as in a cam system in consideration of the fact that the exhaust gas is not compressed in the manner disclosed in the technology of the above publication, and mainly to ensure that a desired exhaust pulse is obtained through control of the valve opening speed. By controlling the exhaust valve in this manner, turbine efficiency can be improved and fuel consumption reduced.

Note that the present invention is effective when used in a gasoline engine as well as a diesel engine. The present invention is also effective in either a small or large engine, but is particularly effective in a large engine due to the remarkable effect in the low speed region. In this embodiment, the intake valve is also driven by an actuator but does not necessarily have to be, and may be driven by a mechanical cam.

According to the present invention as described above, meritorious effects such as an improvement in turbine efficiency and a reduction in fuel consumption and so on are achieved by rapidly opening an exhaust valve.

## Claims

1. A turbocharged engine comprising an actuator for driving an exhaust valve and control means for controlling this actuator,
wherein said actuator is controlled such that said exhaust valve opens more rapidly as compared to a case in which a mechanical cam is used and in which the valve opening start timing is identical.

2. The turbocharged engine according to claim 1, wherein said actuator is controlled such that said exhaust valve opens to a substantially maximum lift instantaneously from the start of valve opening.

3. The turbocharged engine according to claim 1, wherein said actuator is controlled such that the internal pressure of an exhaust port reaches a maximum value within a quarter of the time period during which said exhaust valve is open from the opening start timing of said exhaust valve.

4. A turbocharged engine comprising an actuator for driving an exhaust valve and control means for controlling this actuator,
wherein said actuator is controlled such that said exhaust valve begins to open at an identical timing to a case in which a mechanical cam is used and the valve opening speed reaches a speed at which a desired exhaust pulse can be obtained.
